(19) Europäisches Patentamt
European Patent Office
Office européen des brevets

(11) Numéro de publication : **0 189 227 B1**

# (12) FASCICULE DE BREVET EUROPÉEN

(45) Date de publication du fascicule du brevet : **05.04.89**

(51) Int. Cl.$^4$ : **C 08 G 65/32**, C 08 G 79/04, C 08 G 18/67

(21) Numéro de dépôt : **86200058.5**

(22) Date de dépôt : **14.01.86**

## (54) Polyétherpolyols phosphobromés, procédés pour leur obtention et utilisation de ces polyétherpolyols dans la fabrication de mousses souples de polyuréthane ignifuges.

(30) Priorité : **24.01.85 FR 8501109**

(43) Date de publication de la demande : **30.07.86 Bulletin 86/31**

(45) Mention de la délivrance du brevet : **05.04.89 Bulletin 89/14**

(84) Etats contractants désignés : **AT BE CH DE FR GB IT LI LU NL SE**

(56) Documents cités :
**DE-A- 2 539 982**
**US-A- 4 044 074**
**US-A- 4 298 709**

(73) Titulaire : **SOLVAY & Cie (Société Anonyme)**
**Rue du Prince Albert, 33**
**B-1050 Bruxelles (BE)**

(72) Inventeur : **Collin, André**
**Rue du Pont Piraux, 3A**
**B-6338 Ligny (BE)**
Inventeur : **Wautier, Henri**
**Rue de l'Europe, 68**
**B-7490 Braine-le-Comte (BE)**

**EP 0 189 227 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne des nouveaux polyétherpolyols phosphobromés, des procédés pour l'obtention de ces polyétherpolyols et l'utilisation de ces polyétherpolyols dans la fabrication de mousses souples de polyuréthane ignifuges.

Grâce à leurs propriétés de confort, les mousses souples de polyuréthane trouvent des applications multiples et variées dans l'industrie et notamment dans les secteurs de l'ameublement, du capitonnage et du rembourrage dans lesquels la résistance au feu est par ailleurs une propriété désirable voire indispensable.

Il existe plusieurs moyens pour impartir des propriétés de résistance au feu aux mousses de polyuréthane. Un procédé bien connu consiste à incorporer aux polyétherpolyols destinés à la fabrication des mousses de polyuréthane des additifs ignifuges non réactifs tels que des composés organiques halogénés et/ou phosphorés non réactifs. Ces additifs, non liés chimiquement au polymère de base, sont incapables d'assurer une résistance au feu permanente et uniformément répartie.

Un autre moyen connu consiste à mettre en œuvre des polyétherpolyols halogénés et/ou phosphorés qui assurent la permanence de la résistance au feu de mousses de polyuréthane résultantes.

Toutefois, on a maintenant constaté que bon nombre de polyétherpolyols phospho-halogénés utilisables pour ignifuger de manière permanente les mousses souples de polyuréthane à base de polyétherpolyols présentent des inconvénients graves, tels que l'instabilité à l'hydrolyse et/ou la détérioration des propriétés de confort et plus particulièrement de la portance (résistance à la compression) des mousses de polyuréthane résultantes.

La présente invention, telle qu'elle est caractérisée dans les revendications, a pour but de procurer une nouvelle classe de polyétherpolyols phosphobromés comprenant dans leur molécule des radicaux oxyalkyléniques liés à des atomes de phosphore à l'état de phosphate ou de phosphonate et des radicaux 1,4-dioxy-2,3-dibromo-2-buténiléniques qui soient utilisables dans la fabrication de mousses souples de polyuréthane ignifuges ne présentant pas les inconvénients précités.

Les polyétherpolyols phosphobromés selon l'invention préférés répondent à la formule générale (I) :

$$Z\left[O-(Y)_m\left\{\underset{X}{\overset{O}{\overset{\|}{P}}}-(Y)_{n_1}O-CH_2-\overset{Br}{\overset{|}{C}}=\underset{Br}{\underset{|}{C}}-CH_2-O-(Y)_{n_2}\right\}_p H\right]_z \qquad \text{(I) et,}$$

dans laquelle

Z représente un radical aliphatique non hydroxylé comprenant de 1 à 6 atomes de carbone et de valence z

Y représente des radicaux oxyalkyléniques dérivés des oxydes d'éthylène, de propylène et/ou de butylène, les radicaux Y dérivés de l'oxyde d'éthylène représentant au plus 50 % molaires de la totalité des radicaux Y

X représente des radicaux aliphatiques monovalents, identiques ou différents, choisis parmi les radicaux du type —R ou —OR dans lesquels R représente un radical alkyle saturé, éventuellement halogéné, comprenant de 1 à 3 atomes de carbone et les radicaux du type

$$-(Y)_{n_1}O-CH_2-\overset{Br}{\overset{|}{C}}=\underset{Br}{\underset{|}{C}}-CH_2-O-(Y)_{n_2}H,$$

z représente un nombre entier allant de 1 à 4

m représente un nombre tel que $0 \leq zm \leq 50\ z$

p représente un nombre tel que $z \leq zp \leq 5\ z$ et

$n_1$ et $n_2$ représentent des nombres différents de zéro tels que $2\,pz \leq pz(n_1 + n_2) \leq 12\,pz$, ces polyétherpolyols phosphobromés étant en outre caractérisés par un rapport entre le nombre total de radicaux oxyalkyléniques et le nombre total d'atomes de phosphore égal à 7 au moins.

Les polyétherpolyols phosphobromés selon l'invention qui résultent de réactions de condensation successives ne répondent pas à des formules chimiques bien définies. C'est pourquoi la formule générale (I) doit être établie statistiquement. Dans cette formule, le radical aliphatique Z correspond au résidu non hydroxylé de l'initiateur hydroxylé de formule générale :

$$Z \left[ O \left( Y \right)_m H \right]_z \qquad (II)$$

utilisé pour fabriquer les polyétherpolyols phosphobromés selon l'invention, les radicaux oxyalkyléniques $(Y)_m$ répondent indifféremment aux formules

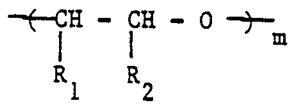 et 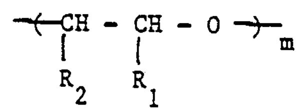

et les radicaux $(Y)_n$ (où $n = n_1$ ou $n_2$) répondent indifféremment aux formules

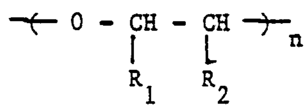 ou 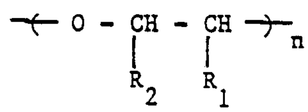

dans lesquelles les radicaux $R_1$ et $R_2$ représentent indépendamment l'un de l'autre et en fonction de l'oxyde d'alkène utilisé de l'hydrogène, un groupement méthyle ou un groupement éthyle.

L'initiateur hydroxylé (II) peut être choisi indifféremment parmi les alcools et les polyols aliphatiques monomères, saturés ou insaturés et éventuellement halogénés comprenant de 1 à 6 atomes de carbone et de 1 à 4 groupements hydroxyles (z = 1 à 4) (cas où $mz \neq 0$) et les produits d'addition de mz moles d'oxydes d'éthylène, de propylène et/ou de butylène sur les alcools et les polyols aliphatiques monomères précités (cas où $mz \neq 0$).

A titre d'exemples non limitatifs de pareils alcools et polyols aliphatiques monomères initiateurs de formule générale (II) dans laquelle mz = 0, on peut citer les alcools en $C_1$ à $C_6$, les éthylène-, propylène et hexaméthylèneglycols, la glycérine, les butane- et hexanetriols, le triméthylolpropane, le pentaérythritol, le diéthylèneglycol, le triéthylèneglycol, les monochlor- et monobromhydrines du glycérol, le 3,4-dibromo-1,2-butanediol, le 2,3-dibromol, 4-butanediol, le 2,3-dibromo-2-butène-1,4-diol, le 2,2(bis)bromométhyl-1,3-propanediol, le 1,2,5,6-tétrabromo-3,4-hexanediol.

A titre d'exemples non limitatifs d'initiateurs hydroxylés de formule générale (II) dans laquelle mz est différent de zéro, on peut citer les produits d'addition d'oxydes d'éthylène, de propylène et/ou de butylène sur les alcools et les polyols aliphatiques monomères précités. On donne néanmoins la préférence aux polyols aliphatiques monomères comprenant de 3 à 5 atomes de carbone et de 2 à 3 groupements hydroxyles. Des polyols monomères initiateurs tout particulièrement préférés sont la glycérine, le 2,3-dibromo-2-butène-1,4-diol et le 2,2(bis)bromométhyl-1,3-propanediol.

Les polyoxyalkylènepolyols résultants sont des produits bien connus qu'on fabrique avantageusement par oligomérisation d'un oxyde d'alkène ou d'un mélange d'oxydes d'alkènes sur un alcool ou un polyol monomère initiateur. On donne la préférence aux oxydes de propylène et de butylène et aux mélanges d'oxydes de propylène ou de butylène et d'oxyde d'éthylène comprenant au plus 50 % molaires d'oxyde d'éthylène. Suivant un mode de réalisation particulièrement préféré de l'invention, tous les radicaux $(Y)_m$ sont dérivés de l'oxyde de propylène.

L'initiateur hydroxylé (II) est par conséquent choisi de préférence parmi les initiateurs de formule générale

$$Z \left[ O \left( Y \right)_m H \right]_z \qquad (II)$$

dans laquelle

Z représente un radical non hydroxylé comprenant de 3 à 5 atomes de carbone et de valence z

Y représente des radicaux oxyalkyléniques dérivés de l'oxyde de propylène

z représente un nombre entier allant de 2 à 3

m représente un nombre tel que $z \leq zm \leq 25\,z$.

Par conséquent, des polyétherpolyols phosphobromés préférés sont ceux de formule générale (I) dans laquelle Z, Y, z et m répondent aux spécifications précitées.

Des polyétherpolyols phosphobromés tout particulièrement préférés sont ceux définis ci-dessus dans lesquels Z représente un radical non hydroxylé choisi parmi les radicaux dérivés de la glycérine, du 2,3-dibromo-2-butène-1,4-diol et du 2,2(bis)bromométhyl-1,3-propanediol.

Dans la formule générale (I), les radicaux

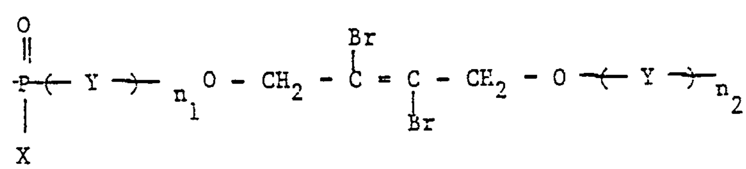

proviennent de la réaction de condensation entre un atome de chlore d'un réactif phosphochloré et un polyoxyalkylènediol bromé de formule générale

$$H-(Y)_{n_1}-O-CH_2-\overset{Br}{\overset{|}{C}}=\underset{\underset{Br}{|}}{C}-CH_2-O-(Y)_{n_2}-H \qquad (III)$$

Les polyoxyalkylènediols bromés (III) sont également des produits bien connus qu'on fabrique avantageusement par oligomérisation de ($n_1 + n_2$) moles d'un oxyde d'alkène sur une mole du 2,3-dibromo-2-butène-1,4-diol ou encore sur une mole de 2-butyne-1,4-diol, suivie d'une bromation additive partielle de l'insaturation acétylénique.

Le polyoxyalkylènediol bromé est choisi, de préférence, parmi ceux de formule générale (III) dans laquelle : Y représente des radicaux oxyalkyléniques dérivés de l'oxyde de propylène et $n_1$ et $n_2$ représentent des nombres différents de zéro tels que $2\ pz \leq pz(n_1 + n_2) \leq 10\ pz$.

Par conséquent, des polyétherpolyols phosphobromés préférés sont ceux de formule générale (I) dans laquelle Y et $n_1$ et $n_2$ répondent aux spécifications précitées.

On donne par ailleurs la préférence aux polyétherpolyols phosphobromés de formule générale (I) dans laquelle : p représente un nombre tel que $z \leq zp \leq 3\ z$, c'est-à-dire comprenant en moyenne de 1 à 3 atomes de phosphore par groupement hydroxyle de l'initiateur hydroxylé (II).

Pour ce qui concerne les radicaux X dans la formule générale (I), ceux-ci proviennent, suivant un premier mode de réalisation de l'invention, des radicaux X du ou des réactifs phosphodichlorés utilisés lorsque ceux-ci sont choisis parmi les produits répondant à la formule générale

$$X-\overset{\overset{O}{\|}}{\underset{\underset{Cl}{|}}{P}}-Cl \qquad (IV)$$

dans laquelle X représente des radicaux aliphatiques monovalents, identiques ou différents, du type —R ou —OR dans lesquels R représente un radical alkyle saturé, éventuellement halogéné, comprenant de 1 à 3 atomes de carbone.

Suivant un second mode de réalisation de l'invention, les radicaux X dans la formule générale (I) proviennent de réactions de condensation entre des atomes de chlore du réactif phosphotrichloré et d'un alcool aliphatique saturé, éventuellement halogéné, comprenant de 1 à 3 atomes de carbone et/ou d'un polyoxyalkylènediol bromé de formule générale (III).

On donne la préférence aux polyétherpolyols phosphobromés de formule générale (I) dans laquelle : X représente des radicaux aliphatiques monovalents, identiques ou différents, choisis parmi les radicaux du type —OR dans lesquels R représente un radical aliphatique halogéné comprenant 2 ou 3 atomes de carbone, l'halogène étant choisi parmi le chlore et le brome, et les radicaux du type

$$-(Y)_{n_1}-O-CH_2-\overset{Br}{\overset{|}{C}}=\underset{\underset{Br}{|}}{C}-CH_2-O-(Y)_{n_2}-H,$$

Par conséquent des polyétherpolyols phosphobromés selon l'invention qui sont particulièrement préférés sont ceux répondant à la formule générale (I) dans laquelle :

Z représente un radical aliphatique non hydroxylé comprenant de 3 à 5 atomes de carbone et de valence z

Y représente des radicaux oxyalkyléniques dérivés de l'oxyde de propylène

X représente des radicaux aliphatiques monovalents, identiques ou différents, choisis parmi les radicaux du type —OR dans lesquels

R représente un radical aliphatique halogéné comprenant 2 ou 3 atomes de carbone, l'halogène étant choisi parmi le chlore et le brome, et les radicaux de type

$$-(Y)_{n_1}-O-CH_2-\overset{Br}{\overset{|}{C}}=\underset{\underset{Br}{|}}{C}-CH_2-O-(Y)_{n_2}-H,$$

z représente un nombre entier allant de 2 à 3
m représente un nombre tel que $z \leq zm \leq 25\ z$
p représente un nombre tel que $z \leq zp \leq 3\ z$ et
$n_1$ et $n_2$ représentent des nombres différents de zéro tels que $2\ pz \leq pz(n_1 + n_2) \leq 10\ pz$.

Des polyétherpolyols phosphobromés selon l'invention auxquels on donne par ailleurs la préférence sont ceux caractérisés par un rapport entre le nombre total des radicaux oxyalkyléniques et le nombre total d'atomes de phosphore compris entre 8 et 12.

Un calcul simple, dont trois exemples sont détaillés ci-après pour clarifier les idées, permet d'évaluer les valeurs moyennes minimales qu'il conviendra de choisir pour les paramètres m, $n_1$ et $n_2$ et p pour respecter le rapport critique entre le nombre total de radicaux oxyalkyléniques et le nombre total d'atomes de phosphore dans les polyétherpolyols phosphobromés selon l'invention.

Premier exemple de calcul

Supposons que l'on fixe le paramètre p égal à 1, que l'on choisisse comme initiateur hydroxylé (III) le produit d'addition de 12 moles d'oxyde de propylène sur une mole de glycérine (zm = 12 ; z = 3) et des radicaux X égaux à —R ou —OR. Le polyétherpolyol phosphobromé résultant présentera une fonctionnalité égale à 3 et contiendra pz soit 3 atomes de phosphore.

Dans ce cas, la valeur minimale de $(n_1 + n_2)$ à respecter se calcule comme suit :

$$\frac{12 + 3(n_1 + n_2)}{3} \geq 7 \quad \text{d'où} \quad (n_1 + n_2) \geq 3\ .$$

Il s'agira donc en l'occurrence de choisir un polyoxyalkylènediol bromé (III) résultant de l'addition, en moyenne, de 3 moles d'oxyde d'alkène au moins sur une mole de 2,3-dibromo-2-butène-1,4-diol.

Deuxième exemple de calcul

Supposons que l'on fixe les paramètres z et p égaux à 2, que l'on choisisse comme polyoxyalkylènediol bromé (III) le produit d'addition de 4 moles d'oxyde de propylène sur une mole de 2,3-dibromo-2-butène-1,4-diol et des radicaux X égaux à —R ou —OR. Le polyétherpolyol phosphobromé résultant présentera une fonctionnalité égale à 2 et contiendra 4 atomes de phosphore.

Dans ce cas, la valeur minimale de m se calcule comme suit :

$$\frac{(2 \times 2 \times 4) + 2\ m}{4} \geq 7 \quad \text{d'où} \quad m \geq 6\ .$$

Il s'agira donc en l'occurrence de choisir un initiateur hydroxylé (II) résultant de l'addition, en moyenne, de 12 moles d'oxyde d'alkène au moins sur une mole de diol aliphatique.

Troisième exemple de calcul

Supposons que l'on fixe le paramètre p égal à 1, que l'on choisisse comme initiateur hydroxylé (II) le produit de la réaction de 4 moles d'oxyde de propylène sur une mole de 2,2(bis)bromométhyl-1,3-propanediol (zm = 4 ; z = 2) et comme radicaux X, un radical —R et un radical dérivé de polyoxyalkylènediol bromé (III). Le polyétherpolyol phosphobromé résultant comprendra 2 atomes de phosphore et 2 radicaux X dont un seul dérivera de polyoxyalkylènediol bromé (III).

Dans ce cas, la valeur minimale de $(n_1 + n_2)$ se calcule comme suit :

$$\frac{4 + 2(n_1 + n_2) + 1(n_1 + n_2)}{2} \geq 7 \quad \text{d'où} \quad (n_1 + n_2) \geq 3{,}33\ .$$

Il s'agira donc en l'occurrence de choisir un polyoxyalkylènediol bromé (III) résultant de l'addition, en moyenne, de 3,33 moles d'oxyde d'alkène au moins sur un mole de 2,3-dibromo-2-butène-1,4-diol.

La présente invention vise également à procurer des procédés pour l'obtention des polyétherpolyols phosphobromés selon l'invention.

Suivant un premier mode d'obtention, on fait appel à un réactif phosphodichloré de formule générale

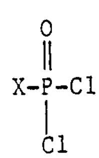

(IV)

dans laquelle

X représente des radicaux aliphatiques monovalents, choisis parmi les radicaux —R ou —OR dans lesquels R représente un radical alkyle saturé, éventuellement halogéné, comprenant de 1 à 3 atomes de carbone (dichlorophosphates et dichlorophosphonates). Dans ce cas, le procédé d'obtention de polyétherpolyols phosphobromés selon l'invention comprend deux étapes.

Un premier mode d'obtention de polyétherpolyols phosphobromés selon l'invention consiste, dès lors, dans une première étape, à condenser z moles de réactif phosphodichloré (IV) en présence d'une mole d'initiateur hydroxylé (II) pour obtenir un produit phosphochloré de formule générale :

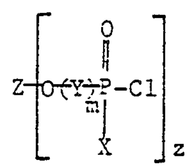

(V) et

dans une deuxième étape, à condenser en présence du produit (V) résultant de l'étape précédente pz moles de polyoxyalkylènediol bromé (III) et (p-1)z moles de réactif phosphodichloré (IV).

Suivant un second mode d'obtention, le réactif phosphochloré est de l'oxychlorure de phosphore ($POCl_3$). Dans ce cas, le procédé d'obtention de polyétherpolyols phosphobromés selon l'invention comprend trois étapes.

Un second mode d'obtention de polyétherpolyols phosphobromés selon l'invention consiste dès lors, dans une première étape, à condenser z moles d'oxychlorure de phosphore en présence d'une mole d'initiateur hydroxylé (II) pour obtenir un produit phosphodichloré de formule générale :

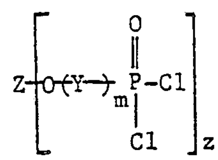

(VI)

dans une deuxième étape, à condenser en présence du produit (VI) de l'étape précédente pz moles de polyoxyalkylènediol bromé (III) et (p-1)z moles d'oxychlorure de phosphore pour obtenir un polyétherpolyol phosphobromé de formule générale :

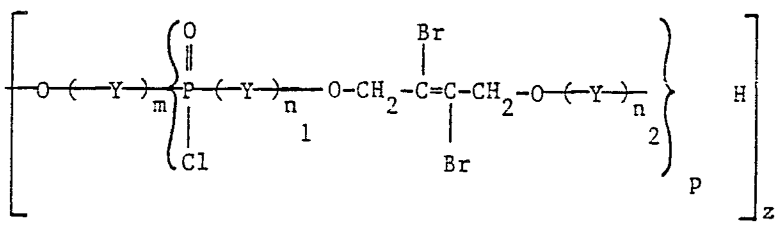

(VII) et,

dans une troisième étape, à condenser en présence du produit (VII) résultant de l'étape précédente pz moles au total d'alcool aliphatique saturé, éventuellement halogéné, comprenant de 1 à 3 atomes de carbone et/ou de polyoxyalkylènediol bromé (III).

On donne la préférence au procédé d'obtention à l'intervention d'oxychlorure de phosphore, car il permet d'ajuster « in situ » la fonctionnalité moyenne des polyétherpolyols phosphobromés selon l'invention.

Les procédés d'obtention suivant les deux variantes décrites ci-avant s'effectuent à faible température, en règle générale entre 0 et 25 °C environ, dans des solvants organiques tels que des solvants aromatiques ou chlorés habituels du type benzène, toluène, chlorure de méthylène, tétrachlorométhane ou encore 1,2-dichloroéthane. De préférence, on utilise un solvant chloré et plus particulièrement encore le 1,2-dichloroéthane.

Les réactions de condensation, qui procèdent toutes par l'élimination d'acide chlorhydrique, sont fortement accélérées par la présence de composés basiques organiques ou inorganiques. On donne néanmoins la préférence aux composés basiques organiques, les meilleurs résultats ayant été obtenus avec les amines tertiaires telles que la triéthylamine et la pyridine.

Cette dernière constitue un accélérateur basique tout particulièrement préféré.

Un mode de réalisation particulièrement avantageux consiste par ailleurs à mettre en œuvre, au départ des procédés d'obtention selon l'une ou l'autre des deux variantes, la totalité du réactif phosphochloré et à régler le déroulement des réactions de condensation successives par l'addition successive de quantités appropriées d'accélérateur basique. De préférence, on met en œuvre un léger excès, de 1 à 5 % molaires environ, d'accélérateur basique par rapport aux quantités stœchiométriques.

L'adjonction d'une amine tertiaire au mélange réactionnel donne lieu à l'élimination d'acide chlorhydrique sous forme de chlorhydrate d'amine qui peut être ensuite éliminé du mélange réactionnel par tout moyen connu, tel qu'une filtration ou un lavage à l'eau.

Les polyétherpolyols phosphobromés selon l'invention peuvent être récupérés du mélange réactionnel par toute opération appropriée et connue à cet effet. Une façon adéquate consiste à évaporer le solvant organique à température modérée et sous pression réduite.

Par conséquent, un mode de réalisation préféré des procédés d'obtention de polyétherpolyols phosphobromés selon l'invention consiste à réaliser les différentes étapes de condensation dans un solvant organique chloré, à faible température, en présence d'un accélérateur basique organique choisi parmi les amines tertiaires, de préférence, la pyridine et, par ailleurs, à introduire la totalité du réactif phosphochloré au départ de la première étape, le déroulement des étapes successives de condensation étant réglé par l'addition successive de quantités appropriées d'accélérateur basique.

Les polyétherpolyols phosphobromés selon l'invention sont des liquides peu visqueux présentant une viscosité dynamique mesurée selon la norme DIN 530K de septembre 1978 inférieure à 30 Pa.s, généralement comprise entre 5 et 15 Pa.s. Ils présentent un indice d'hydroxyle généralement compris entre 20 et 70 mg KOH/g de polyétherpolyol phosphobromé, un indice d'acide généralement inférieur à 5 mg KOH/g de polyétherpolyol phosphobromé, une teneur en phosphore d'environ 2 à 5 % en poids et une teneur en brome d'environ 10 à 25 % en poids. Les polyétherpolyols phosphobromés selon l'invention sont, par ailleurs, miscibles en toutes proportions avec les polyétherpolyols classiques pour mousses souples de polyuréthane à base d'oxyde de propylène principalement.

Les polyétherpolyols phosphobromés selon l'invention sont utilisables en tant qu'additifs réactifs ignifugeants pour polyétherpolyols destinés à la fabrication de mousses souples de polyuréthane.

Un aspect surprenant des polyétherpolyols phosphobromés selon l'invention réside précisément dans le fait que ceux-ci, lorsqu'ils sont utilisés en tant qu'additifs réactifs ignifugeants pour polyétherpolyols non halogénés classiques ne conduisent pas à une altération des propriétés de confort des mousses résultantes et, en particulier, de la portance.

La présente invention concerne également l'utilisation des polyétherpolyols phosphobromés selon l'invention comme additifs réactifs ignifugeants dans la fabrication de mousses souples de polyuréthane ignifuges dérivés de polyétherpolyols.

Suivant un mode de réalisation préféré de l'invention, on utilise des polyétherpolyols phosphobromés selon l'une quelconque des revendications 2 à 4 comme additifs réactifs ignifugeants dans la fabrication de mousses souples de polyuréthane ignifuges à l'intervention de polyétherpolyols à base d'oxyde de propylène principalement.

La quantité de polyétherpolyol phosphobromé à utiliser n'est pas particulièrement critique et les quantités minimales nécessaires pour assurer l'auto-extinguibilité de la mousse de polyuréthane résultante dépendent, entre autres, de la densité de celle-ci. Pour fixer les idées, on utilise généralement les polyétherpolyols phosphobromés selon l'invention à raison de 2 à 50 % en poids, et plus particulièrement encore à raison de 2 à 30 % en poids du mélange de polyétherpolyols destinés à la fabrication de mousses souples de polyuréthane ignifuges.

Pour le reste, les conditions générales de fabrication de mousses souples de polyuréthane ignifuges à l'intervention de mélanges de polyétherpolyols phosphobromés selon l'invention et de polyétherpolyols sont celles usuellement mises en œuvre pour la fabrication de mousses souples de polyuréthane à base de polyétherpolyols et, par ailleurs, bien connues de l'homme du métier.

Les exemples qui suivent illustrent l'invention sans toutefois la limiter.

Les exemples 1 à 4 illustrent l'obtention de polyétherpolyols phosphobromés selon l'invention. L'exemple 5, de comparaison, illustre l'obtention de polyétherpolyols phosphobromés hors invention.

Les exemples 6 à 10 illustrent l'obtention de mousses souples de polyuréthane à l'intervention de polyétherpolyols. Dans les exemples 6 et 7, on met en œuvre des polyétherpolyols phosphobromés selon l'invention obtenus aux exemples 2 et 1 respectivement. Dans l'exemple 8, de comparaison, on met en œuvre des polyétherpolyols phosphobromés hors invention obtenus à l'exemple 5, de comparaison. Dans l'exemple 9, de comparaison, on met en œuvre un polyétherpolyol phosphochloré commercialisé par HOECHST sous le nom EXOLIT 413 et enfin dans l'exemple 10, également de comparaison, on met en œuvre exclusivement un polyétherpolyol non halogéné.

Le polyétherpolyol non halogéné utilisé en mélange avec des polyétherpolyols phosphohalogénés dans les exemples 6 et 9 et utilisé à 100 % dans l'exemple 10 est un polyétherpolyol à base d'oxydes de propylène et d'éthylène ayant un poids moléculaire de 3 500 et un indice d'hydroxyle de 48 mg KOH/g, commercialisé par CARBOCHIMIQUE sous le nom TERCAROL 908.

Exemple 1

L'exemple 1 illustre l'obtention de polyétherpolyols phosphobromés de formule générale (I) dans laquelle :

$Z = -CH_2-CH-CH_2-$
$\qquad\qquad\quad |$
$Y = -CH_2-CH-O-$ et/ou $-CH-CH_2-O-$
$\qquad\qquad\quad |\qquad\qquad\qquad\quad |$
$\qquad\qquad\quad CH_3 \qquad\qquad\quad CH_3$

$X = -O-CH-OH_2Cl$
$\qquad\qquad\ |$
$\qquad\qquad\ CH_3$

$z = 3 \qquad pz = 3$
$mz = 24{,}3 \qquad pz(n_1 + n_2) = 7{,}5$

et qui présentent un rapport entre le nombre total de groupements oxyalkyléniques et le nombre total d'atomes de phosphore

$$\frac{\Sigma Y}{\Sigma P} \quad \text{égal à} \quad \frac{24{,}3 + 7{,}5}{3} = 10{,}6 .$$

Ces polyétherpolyols sont fabriqués à l'intervention d'un initiateur hydroxylé (II) constitué par un polyoxypropylènetriol résultant de l'addition de 24,3 moles d'oxyde de propylène en moyenne sur une mole de glycérine, d'un polyoxypropylènediol bromé (III) résultant de l'addition de 2,5 moles d'oxyde de propylène en moyenne sur une mole de 2,3-dibromo-2-butène-1,4-diol, d'oxychlorure de phosphore ($POCl_3$) et de 1-chloro-2-propanol.

(1) Dans un réacteur thermostatisé de 2 litres équipé d'un agitateur, d'un condenseur à reflux, d'une ampoule d'introduction et d'un tube plongeant alimenté en azote pur et sec, on introduit successivement sous atmosphère d'azote 624 g de 1,2-dichloroéthane et 150 g (0,1 mole) d'initiateur hydroxylé (II). Le mélange est amené sous bonne agitation à 0 °C en maintenant un barbotage continu d'azote. On ajoute ensuite rapidement 46 g (0,3 mole) de $POCl_3$. Tout en maintenant la température du milieu réactionnel à 0 °C, on introduit en 30 minutes par l'intermédiaire de l'ampoule 23,7 g (0,3 mole) de pyridine. Après introduction de la pyridine, on amène la température du milieu réactionnel à 20 °C et on laisse la réaction se poursuivre à cette température pendant 2 heures.

(2) Après ce laps de temps et toujours à 20 °C, on ajoute rapidement 117,3 g (0,3 mole) de polyoxypropylènediol bromé (III), puis en 30 minutes 23,7 g (0,3 mole) de pyridine. Après un nouveau mûrissage de 3 heures à 20 °C, on ajoute,

(3) 31,2 g (0,33 mole) de 1-chloro-2-propanol, puis en 30 minutes 24,9 g (0,315 mole) de pyridine. Après un mûrissage de 5 heures à 20 °C, le chlorhydrate de pyridine formé qui précipite au cours des réactions de condensation successives est éliminé par des lavages à l'eau. Après élimination des matières volatiles par évaporation à 80 °C sous pression réduite, on obtient 303 g (98 % de rendement) d'un liquide brun clair correspondant aux polyétherpolyols phosphobromés définis ci-dessus, présentant les caractéristiques suivantes :

| | Valeurs théoriques | Valeurs mesurées |
|---|---|---|
| Poids moléculaire | ± 3 000 | - |
| Teneur en brome, % en poids | 16 | 15,2 |
| Teneur en chlore, % en poids | 3,6 | 3,8 |
| Teneur en phosphore, % en poids | 3,1 | 3,3 |
| Indice d'hydroxyle, mg KOH/g | 56 | 56 |
| Indice d'acide, mg KOH/g | - | < 0,3 |
| Fonctionnalité moyenne | 3 | - |
| Viscosité à 25°C, Pa.s | - | 10,7 |
| Poids spécifique, g/cm$^3$ | - | 1,26 |

Exemple 2

L'exemple 2 illustre l'obtention de polyétherpolyols phosphobromés de formule générale (I) dans laquelle :

Z = 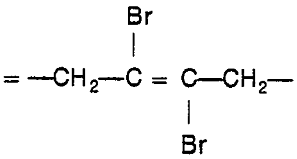 ,

Y = 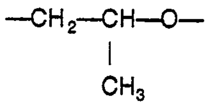 et/ou 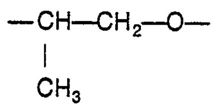

X = 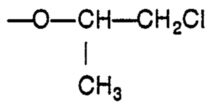

$z = 2 \qquad pz = 2,3$

$mz = 6,5 \qquad pz(n_1 + n_2) = 14,95$

et qui présentent un rapport

$$\frac{\Sigma Y}{\Sigma P} \text{ égal à } \frac{6,5 + 14,95}{2,3} = 9,33 .$$

Ces polyétherpolyols sont fabriqués à l'intervention d'un initiateur hydroxylé (II) et d'un polyoxypropylènediol bromé (III) identiques et résultant tous deux de l'addition de 6,5 moles d'oxyde de propylène en moyenne sur une mole de 2,3-dibromo-2-butène-1,4-diol, d'oxychlorure de phosphore ($POCl_3$) et de 1-chloro-2-propanol.

En utilisant l'appareillage de l'exemple 1 et dans les conditions générales de l'exemple 1, on fait réagir en solution dans le 1,2-dichloréthane successivement en trois étapes :

(1) 62,3 g (0,1 mole) de polyoxypropylènediol bromé (III) avec 35,3 g (0,23 mole) de $POCl_3$ en présence de 15,8 g (0,2 mole) de pyridine,

(2) on fait réagir avec le produit de la réaction (1) 143,3 g (0,23 mole) de polyoxypropylènediol bromé (III) en présence de 20,6 g (0,26 mole) de pyridine,

(3) on fait réagir avec le produit de la réaction (2) 24 g (0,25 mole) de 1-chloro-2-propanol en présence de 19,1 g (0,24 mole) de pyridine.

Après lavage à l'eau et élimination des matières volatiles, on obtient avec un rendement de 98 % des polyétherpolyols phosphobromés tels que définis ci-dessus, présentant les caractéristiques suivantes :

| | Valeurs théoriques | Valeurs mesurées |
|---|---|---|
| Poids moléculaire | ± 2 400 | - |
| Teneur en brome, % en poids | 22,2 | 21,2 |
| Teneur en chlore, % en poids | 3,4 | 3,6 |
| Teneur en phosphore, % en poids | 3,0 | 3,2 |
| Indice d'hydroxyle, mg KOH/g | 47 | 47 |
| Indice d'acide, mg KOH/g | - | < 0,3 |
| Fonctionnalité moyenne | 2 | - |
| Viscosité à 25°C, Pa.s | - | 12,4 |
| Poids spécifique, g/cm$^3$ | - | 1,29 |

On obtient des polyétherpolyols phosphobromés identiques en reproduisant l'exemple 2 en deux étapes avec mise en œuvre de la totalité des réactifs utilisés aux étapes (1) et (2) au départ de la réaction, la troisième étape de l'exemple 1 constituant alors la deuxième étape.

Exemple 3

L'exemple 3 illustre l'obtention de polyétherpolyols phosphobromés de formule générale (I) dans laquelle

Z =
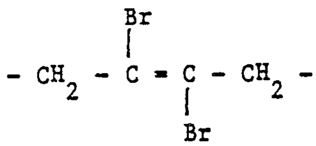

Y =
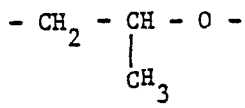
et/ou
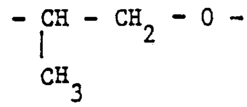

$X = -O-CH_2-CH_3$

et

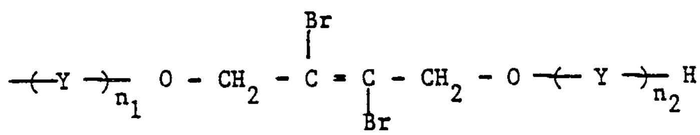

(3 radicaux X du type $-O-CH_2-CH_3$ et 1 radical X du type du radical dibromé)

$z = 2 \qquad pz = 4$

$mz = 6 \qquad pz\ (n_1 + n_2) = 24$

et qui présentent un rapport

$$\frac{\Sigma Y}{\Sigma P} \text{ égal à } \frac{6+24+6}{4} = 9 .$$

Ces polyétherpolyols sont fabriqués à l'intervention d'un initiateur hydroxylé (II) et d'un polyoxypropylènediol bromé (III) identiques et résultant tous deux de l'addition de 6 moles d'oxyde de propylène en moyenne sur une mole de 2,3-dibromo-2-butène-1,4-diol, d'oxychlorure de phosphore et d'éthanol.

En utilisant l'appareillage de l'exemple 1, et dans les conditions générales de l'exemple 1, on fait réagir en solution dans le 1,2-dichloréthane successivement en trois étapes :

(1) 59,4 g (0,1 mole) de polyoxypropylènediol bromé (III) avec 61,4 g (0,4 mole) de $POCl_3$ en présence de 15,8 g (0,2 mole) de pyridine,

(2) on fait réagir avec le produit de la réaction (1) 297 g (0,5 mole) de polyoxypropylènediol bromé (III) en présence de 55,4 g (0,7 mole) de pyridine,

(3) on fait réagir avec le produit de la réaction (2) 15,2 g (0,33 mole) d'éthanol en présence de 24,5 g de pyridine.

Après lavage à l'eau et élimination des matières volatiles, on obtient avec un rendement de 98 % des polyétherpolyols phosphobromés tels que définis ci-dessus, présentant les caractéristiques suivantes :

| | Valeurs théoriques | Valeurs mesurées |
|---|---|---|
| Poids moléculaire | ± 3 900 | - |
| Teneur en brome, % en poids | 25 | 23,5 |
| Teneur en phosphore, % en poids | 3,2 | 3,4 |
| Indice d'hydroxyle, mg KOH/g | 43 | 45 |
| Indice d'acide, mg KOH/g | - | < 0,3 |
| Fonctionnalité moyenne | 3 | - |
| Viscosité à 25°C, Pa.s | - | 4,4 |
| Poids spécifique, g/cm³ | - | 1,31 |

Exemple 4

L'exemple 4 illustre l'obtention de polyétherpolyols phosphobromés de formule générale (I) dans laquelle :

Z = 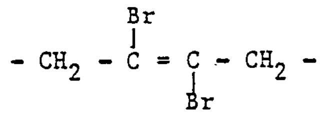

Y = 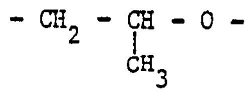 et/ou 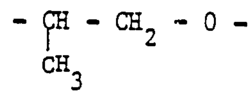

$X = -O-CH_2-CH_3$

$z = 2$ $pz = 3$

$mz = 6{,}50$ $pz\,(n_1 + n_2) = 19{,}5$

et qui présentent un rapport

$$\frac{\Sigma Y}{\Sigma P} \quad \text{égal à} \quad \frac{6{,}5 + 19{,}50}{3} = 8{,}67\,.$$

Ces polyétherpolyols sont fabriqués à l'intervention d'un initiateur hydroxylé (II) et d'un polyoxypropylènediol bromé (III) identiques et résultant tous deux de l'addition de 6,5 moles d'oxyde de propylène en moyenne sur une mole de 2,3-dibromo-2-butène-1,4-diol et d'éthyldichlorophosphate ($C_2H_5POCl_2$).

En utilisant l'appareillage de l'exemple 1 et dans les conditions générales de l'exemple 1, on fait réagir en solution dans le dichloroéthane successivement en deux étapes :

(1) 62,3 g (0,1 mole) de polyoxypropylènediol bromé (III) avec 48,9 g (0,3 mole) d'éthyldichlorophosphate en présence de 15,8 g (0,2 mole) de pyridine,

(2) on fait réagir avec le produit de la réaction (1) 186,9 g (0,3 mole) de polyoxypropylènediol bromé (III) en présence de 34 g (0,43 mole) de pyridine.

Après lavage à l'eau et élimination des matières volatiles, on obtient avec un rendement de 98 % des polyétherpolyols phosphobromés tels que définis ci-dessus présentant les caractéristiques suivantes :

| | Valeurs théoriques | Valeurs mesurées |
|---|---|---|
| Poids moléculaire | ± 2 750 | - |
| Teneur en brome, % en poids | 23,3 | 22,5 |
| Teneur en phosphore, % en poids | 3,4 | 3,5 |
| Indice d'hydroxyle, mg KOH/g | 40 | 41 |
| Indice d'acide, mg KOH/g | - | < 0,3 |
| Fonctionnalité moyenne | 2 | - |
| Viscosité à 25°C, Pa.s | - | 4 |
| Poids spécifique, g/cm$^3$ | - | 1,30 |

On obtient des polyétherpolyols phosphobromés en tous points identiques en reproduisant l'exemple 4 avec mise en œuvre de la totalité de tous les réactifs au départ.

Exemple 5

L'exemple 5, de comparaison, illustre l'obtention de polyétherpolyols phosphobromés hors invention de formule générale (I) dans laquelle :

$$Z = -CH_2-\underset{}{\overset{Br}{\overset{|}{C}}}=\underset{\underset{Br}{|}}{C}-CH_2-$$

$$Y = -CH_2-\underset{\underset{CH_3}{|}}{CH}-O- \quad \text{et/ou} \quad -\underset{\underset{CH_3}{|}}{CH}-CH_2-O-$$

$X = -O-CH_2-CH_3$

$z = 2$ $pz = 5$

$mz = 2,50$ $pz\ (n_1 + n_2) = 12,50$

et qui présentent un rapport

$$\frac{\Sigma Y}{\Sigma P} \quad \text{égal à} \quad \frac{2,50 + 12,50}{5} = 3\,.$$

Ces polyétherpolyols sont fabriqués à l'intervention d'un initiateur hydroxylé (II) et d'un polyoxypropylènediol bromé (III) identiques et résultant tous deux de l'addition de 2,50 moles d'oxyde de propylène en moyenne sur une mole de 2,3-dibromo-2-butène-1,4-diol, d'oxychlorure de phosphore et d'éthanol.

En utilisant l'appareillage de l'exemple 1 et dans les conditions générales de l'exemple 1, on fait réagir en solution dans le 1,2-dichloroéthane successivement en trois étapes :

(1) 39,1 g (0,1 mole) de polyoxypropylènediol bromé (III) avec 76,8 g (0,5 mole) de $POCl_3$ en présence de 15,8 g (0,2 mole) de pyridine,

(2) on fait réagir avec le produit de la réaction (1) 195,5 g de polyoxypropylènediol bromé (III) en présence de 63,3 g de pyridine,

(3) on fait réagir avec le produit de la réaction (2) 25,3 g (0,55 mole) d'éthanol en présence de 41,5 g (0,525 mole) de pyridine.

Après lavage à l'eau et élimination des matières volatiles, on obtient avec un rendement de 98 % des polyétherpolyols phosphobromés tels que définis ci-dessus, présentant les caractéristiques suivantes :

| | Valeurs théoriques | Valeurs mesurées |
|---|---|---|
| Poids moléculaire | ± 2 800 | - |
| Teneur en brome, % en poids | 34 | 32 |
| Teneur en phosphore, % en poids | 5,5 | 5,4 |
| Indice d'hydroxyle, mg KOH/g | 40 | 36 |
| Indice d'acide, mg KOH/g | - | < 1 |
| Fonctionnalité moyenne | 2 | - |
| Viscosité à 25°C, Pa.s | - | 95 |
| Poids spécifique, g/cm³ | - | 1,51 |

Exemple 6

L'exemple 6 illustre l'utilisation de polyétherpolyols phosphobromés obtenus à l'exemple 2 dans la fabrication d'une mousse souple de polyuréthane ignifuge.

Dans un récipient en polyéthylène de 800 cm³, on introduit :

180 g de polyétherpolyol non halogéné TERCAROL 908
20 g de polyétherpolyol phosphobromé obtenu à l'exemple 2
6 g d'eau
1,4 g de silicone
1,0 g d'un mélange contenant 33 % en volume de 1,4-diazabicyclo (2,2,2) octane et 67 % de dipropylèneglycol commercialisé sous la marque DABCO 33 LV, et
0,34 g d'octoate stanneux.

On agite ce mélange pendant une minute de manière à le rendre parfaitement homogène. On ajoute ensuite un mélange 80 : 20 de 2,4- et de 2,6-diisocyanate de toluylène (TDI 80/20) à l'indice 105. Le mélange résultant est agité rapidement pendant 7 secondes, puis versé dans une boîte de 20 × 20 × 20 cm. Les temps de crème et de montée s'élèvent respectivement à 12 et 95 secondes. La mousse subit ensuite un mûrissage de 10 h à 100 °C. Après découpage d'un bloc cubique de 15 cm de côté, on mesure une densité de 33 kg/m³.

On mesure par ailleurs les propriétés de la mousse et en particulier la perméabilité, la résilience, la résistance à la compression (portance) selon la norme DIN 53 377, la résistance à la rupture selon la norme DIN 53 571 et l'allongement à la rupture, la déformation permanente selon la norme DIN 53 572 (% de perte après compression pendant 22 h à 70 °C) et enfin la résistance à la flamme selon la norme MVSS 302, avant et après vieillissement.

Les ingrédients utilisés à la fabrication de la mousse de polyuréthane sont repris au Tableau I en annexe. Les propriétés de la mousse de polyuréthane sont reprises au Tableau II en annexe.

## Exemples 7 à 10

Les exemples 7 à 10 sont réalisés dans les conditions générales de l'exemple 6.

Les ingrédients utilisés à la fabrication des mousses souples de polyuréthane sont repris au Tableau I en annexe, les propriétés des mousses de polyuréthane sont reprises au Tableau II en annexe. Les exemples 8-10 sont des exemples de comparaison.

Tableau I

Ingrédients utilisés à la fabrication des mousses souples de polyuréthane, g

| Ingrédients | Numéro de l'exemple | | | | |
|---|---|---|---|---|---|
| | 6 | 7 | 8 | 9 | 10 |
| Polyétherpolyol non halogéné TERCAROL 908 | 180 | 180 | 180 | 180 | 200 |
| Polyétherpolyol phosphobromé selon l'exemple 2 | 20 | - | - | - | - |
| Polyétherpolyol phosphobromé selon l'exemple 1 | - | 20 | - | - | - |
| Polyétherpolyol phosphobromé selon l'exemple de comparaison 5 | - | - | 20 | - | - |
| Polyétherpolyol phosphochloré EXOLIT 413 | - | - | - | 20 | - |
| Eau | 6 | 6 | 6 | 6 | 6 |
| Silicone | 1,4 | 1,4 | 1,4 | 1,4 | 1,4 |
| 1,4-diazabicyclo(2,2,2) octane DABCO 33 LV | 1,0 | 1,0 | 1,0 | 1,0 | 1,0 |
| Octoate stanneux | 0,34 | 0,30 | 0,70 | 0,24 | 0,30 |
| TDI 80/20 (indice 105) | 75,8 | 76,2 | 75,8 | 78,0 | 75,4 |

(Voir Tableau II page 14)

Tableau II

Propriétés des mousses souples de polyuréthane

| Propriétés | Numéro de l'exemple | | | | |
|---|---|---|---|---|---|
| | 6 | 7 | 8 | 9 | 10 |
| Temps de crème, sec. | 12 | 14 | 14 | 12 | 12 |
| Temps de montée, sec. | 95 | 100 | 120 | 97 | 102 |
| Densité, $kg/m^3$ | 33,6 | 34,1 | 33,4 | 34,1 | 33,3 |
| Perméabilité, mm de colonne d'eau | 1,1 | 1,1 | 1,1 | 1,1 | 1,1 |
| Résilience, % | 48 | 48 | 47 | 51 | 52 |
| Résistance à la compression (portance), kPa à taux de compression de | | | | | |
| 25% | 2,50 | 2,55 | 2,40 | 2,35 | 2,60 |
| 40% | 2,80 | 2,80 | 2,65 | 2,65 | 2,90 |
| 60% | 5,20 | 5,60 | 4,95 | 4,90 | 5,60 |
| Résistance à la rupture, kPa | 100 | 110 | 80 | 80 | 100 |
| Allongement à la rupture, % | 197 | 190 | 135 | 140 | 180 |
| Déformation permanente, % à taux de compression de | | | | | |
| 50 % | 4 | 4 | 2 | 6 | 2 |
| 75 % | 6 | 8 | 6 | 64 | 4 |
| 90 % | 6 | 10 | 6 | 85 | 6 |
| Résistance à la flamme, norme MVSS* | | | | | |
| Avant vieillissement | AE | AE | AE | AE | BC |
| Après vieillissement, 22h à 140°C | AE | AE | AE | AE | BC |

* BC = brûle complètement
AE = autoextinguible (distance brûlée inférieure à 4 cm)

**Revendications** (pour les Etats contractants : BE, CH, DE, FR, GB, IT, LI, LU, NL, SE)

1. Polyétherpolyols phosphobromés comprenant dans leur molécule des radicaux oxyalkyléniques liés à des atomes de phosphore à l'état de phosphate ou de phosphonate et des radicaux 1,4-dioxy-2,3-dibromo-2-butényléniques dans lesquels le rapport entre le nombre total de radicaux oxyalkyléniques et le nombre total d'atomes de phosphore est égal à 7 au moins et qui répondent à la formule générale :

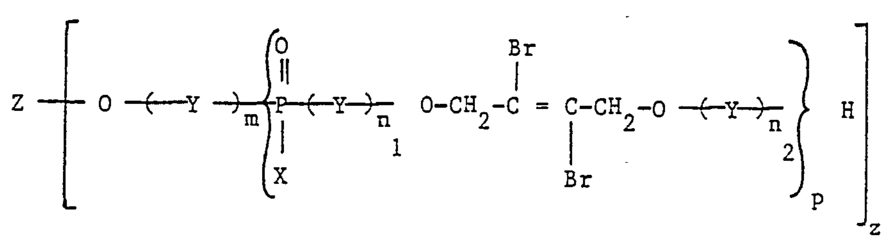 (I)

dans laquelle

Z représente un radical aliphatique non hydroxylé comprenant de 1 à 6 atomes de carbone et de valence z,

Y représente des radicaux oxyalkyléniques dérivés des oxydes d'éthylène, de propylène et/ou de butylène, les radicaux Y dérivés de l'oxyde d'éthylène représentant au plus 50 % molaires de la totalité des radicaux Y,

X représente des radicaux aliphatiques monovalents, identiques ou différents, choisis parmi les radicaux du type —R ou —OR dans lesquels R représente un radical alkyle saturé, éventuellement halogéné, comprenant de 1 à 3 atomes de carbone et les radicaux du type

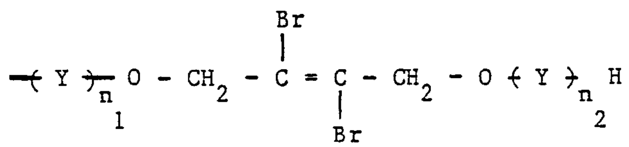

z représente un nombre entier allant de 1 à 4

m représente un nombre tel que $0 \leq zm \leq 50z$,

p représente un nombre tel que $z \leq zp \leq 5z$ et

$n_1$ et $n_2$ représentent des nombres différents de zéro tels que $2pz \leq pz\ (n_1 + n_2) \leq 12\ pz$, ces polyétherpolyols phosphobromés étant en outre caractérisés par un rapport entre le nombre total de radicaux oxyalkyléniques et le nombre total d'atomes de phosphore égal à 7 au moins.

2. Polyétherpolyols phosphobromés selon la revendication 1, caractérisés en ce que :

Z représente un radical aliphatique non hydroxylé comprenant de 3 à 5 atomes de carbone et de valence z,

Y représente des radicaux oxyalkyléniques dérivés de l'oxyde de propylène,

X représente des radicaux aliphatiques monovalents, identiques ou différents, choisis parmi les radicaux du type —OR dans lesquels R représente un radical aliphatique halogéné comprenant 2 ou 3 atomes de carbone, l'halogène étant choisi parmi le chlore et le brome, et les radicaux du type

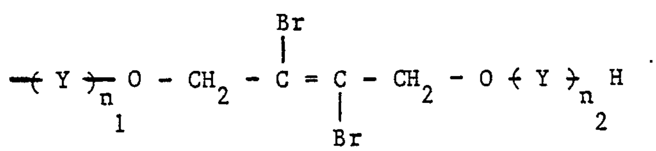

z représente un nombre entier allant de 2 à 3,

m représente un nombre tel que $z \leq zm \leq 25z$,

p représente un nombre tel que $z \leq zp \leq 3z$ et

$n_1$ et $n_2$ représentent des nombres différents de zéro tels que $2pz \leq pz\ (n_1 + n_2) \leq 10\ pz$.

3. Polyétherpolyols phosphobromés selon l'une quelconque des revendications 1 et 2, caractérisés en ce que le rapport entre le nombre total de radicaux oxyalkyléniques et le nombre total d'atomes de phosphore est compris entre 8 et 12.

4. Procédé d'obtention de polyétherpolyols phosphobromés selon la revendication 1, caractérisé en ce que, dans une première étape, on condense z moles de réactif phosphodichloré

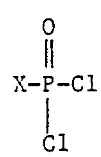

(IV)

en présence d'une mole d'initiateur hydroxylé

$$Z - [O - (Y)_m - H]_z \qquad (II)$$

pour obtenir un produit phosphochloré

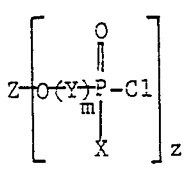

(V)

et, dans une deuxième étape, on condense en présence du produit (V) résultant de l'étape précédente, pz moles de polyoxyalkylènediol bromé

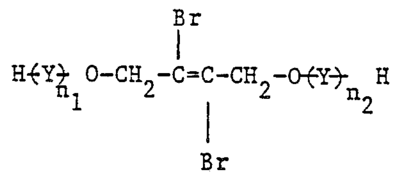

(III)

et (p-1) z moles de réactif phosphodichloré (IV).

5. Procédé d'obtention de polyétherpolyols phosphobromés selon la revendication 1, caractérisé en ce que, dans une première étape, on condense z moles d'oxychlorure de phosphore en présence d'une mole d'initiateur hydroxylé

$$Z-\left[O-(Y)_m H\right]_z \quad \text{(II)}$$

pour obtenir un produit phosphodichloré

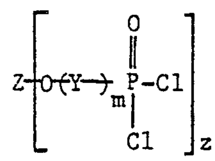

(VI)

dans une deuxième étape, on condense en présence du produit (VI) résultant de l'étape précédente pz moles de polyoxyalkylènediol bromé

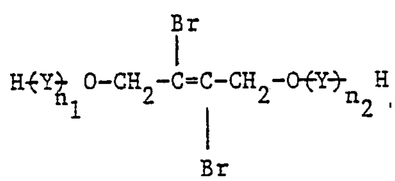

(III)

et (p-1) z moles d'oxychlorure de phosphore pour obtenir un polyétherpolyol phosphobromé

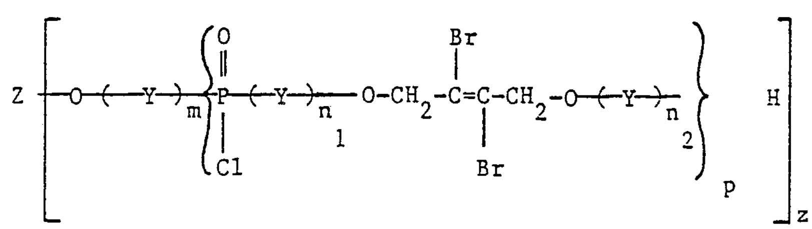

(VII)

et, dans une troisième étape, on condense en présence du produit (VII) résultant de l'étape précédente pz moles au total d'alcool aliphatique saturé, éventuellement halogéné, comprenant de 1 à 3 atomes de carbone et/ou de polyoxyalkylènediol bromé (III).

6. Procédé d'obtention de polyétherpolyols phosphobromés selon l'une quelconque des revendications 4 ou 5, caractérisé en ce qu'on réalise les différentes étapes de condensation dans un solvant organique chloré, à faible température, en présence d'un accélérateur basique organique choisi parmi les amines tertiaires.

7. Procédé d'obtention de polyétherpolyols phosphobromés selon l'une quelconque des revendications 4 à 6, caractérisé en ce qu'on introduit la totalité du réactif phosphochloré au départ de la première étape de condensation et en ce qu'on règle le déroulement des étapes successives de condensation par l'addition successive de quantités appropriées d'accélérateur basique.

8. Utilisation des polyétherpolyols phosphobromés selon l'une quelconque des revendications 1 à 3 comme additifs réactifs ignifugeants dans la fabrication de mousses souples de polyuréthane ignifuges à l'intervention de polyétherpolyols.

9. Utilisation des polyétherpolyols phosphobromés selon l'une quelconque des revendications 1 à 3 comme additifs réactifs ignifugeants dans la fabrication de mousses souples de polyuréthane ignifuges à l'intervention de polyétherpolyols à base d'oxyde de propylène principalement.

**Revendications** (pour l'Etat contractant AT)

1. Utilisation de polyétherpolyols phosphobromés comme additifs réactifs ignifuges dans la fabrication de mousses souples de polyuréthane ignifuges à l'intervention de polyétherpolyols, caractérisée en ce que les polyétherpolyols phosphobromés comprennent dans leur molécule des radicaux oxyalkyléniques liés à des atomes de phosphore à l'état de phosphate ou de phosphonate et des radicaux 1,4-dioxy-2,3-dibromo-2-buténylèniques, le rapport entre le nombre total de radicaux oxyalkyléniques et le nombre total d'atomes de phosphore étant égal à 7 au moins et en ce qu'ils répondent à la formule générale :

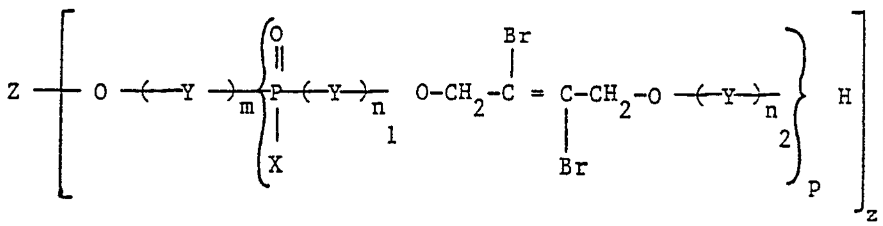 (I)

dans laquelle

Z représente un radical aliphatique non hydroxylé comprenant de 1 à 6 atomes de carbone et de valence z,

Y représente des radicaux oxyalkyléniques dérivés des oxydes d'éthylène, de propylène et/ou de butylène, les radicaux Y dérivés de l'oxyde d'éthylène représentant au plus 50 % molaires de la totalité des radicaux Y,

X représente des radicaux aliphatiques monovalents, identiques ou différents, choisis parmi les radicaux du type —R ou —OR dans lesquels

R représente un radical alkyle saturé, éventuellement halogéné, comprenant de 1 à 3 atomes de carbone et les radicaux du type

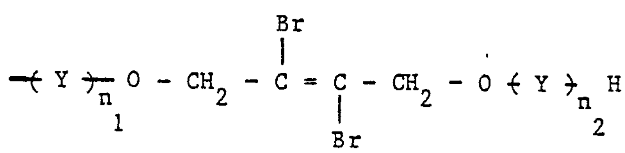

z représente un nombre entier allant de 1 à 4

m représente un nombre tel que $0 \leq zm \leq 50z$,

p représente un nombre tel que $z \leq zp \leq 5z$ et

$n_1$ et $n_2$ représentent des nombres différents de zéro tels que $2pz \leq pz\,(n_1+n_2) \leq 12$ pz, ces polyétherpolyols phosphobromés étant en outre caractérisés par un rapport entre le nombre total de radicaux oxyalkyléniques et le nombre total d'atomes de phosphore égal à 7 au moins.

2. Utilisation de polyétherpolyols phosphobromés selon la revendication 1 comme additifs réactifs ignifuges dans la fabrication de mousses souples de polyuréthane ignifuges à l'intervention de polyétherpolyols à base d'oxyde de propylène principalement.

3. Utilisation de polyétherpolyols phosphobromés selon la revendication 1, caractérisée en ce que :

Z représente un radical aliphatique non hydroxylé comprenant de 3 à 5 atomes de carbone et de valence z,

Y représente des radicaux oxyalkyléniques dérivés de l'oxyde de propylène,

X représente des radicaux aliphatiques monovalents, identiques ou différents, choisis parmi les radicaux du type —OR dans lesquels R représente un radical aliphatique halogéné comprenant 2 ou 3 atomes de carbone, l'halogène étant choisi parmi le chlore et le brome, et les radicaux du type

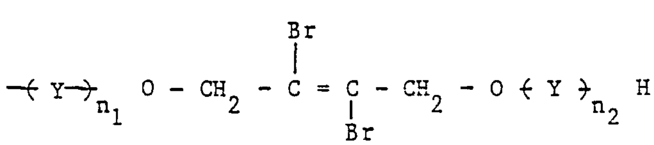

z représente un nombre entier allant de 2 à 3,

m représente un nombre tel que $z \leq zm \leq 25$ z,

p représente un nombre tel que z ≤ zp ≤ 3z et

$n_1$ et $n_2$ représentent des nombres différents de zéro tels que 2pZ ≤ pz ($n_1$ + $n_2$) ≤ 10 pz.

4. Utilisation de polyétherpolyols phosphobromés selon l'une quelconque des revendications 1 à 3, caractérisée en ce que le rapport entre le nombre total de radicaux oxyalkyléniques et le nombre total d'atomes de phosphore est compris entre 8 et 12.

5. Procédé d'obtention de polyétherpolyols phosphobromés utilisables selon l'une quelconque des revendications 1 et 2, caractérisé en ce que, dans une première étape, on condense z moles de réactif phosphodichloré

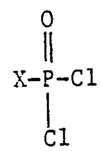 (IV)

en présence d'une mole d'iniateur hydroxylé

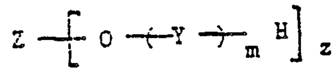 (II)

pour obtenir un produit phosphochloré

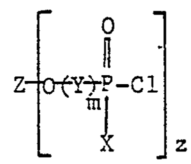 (V)

et, dans une deuxième étape, on condense en présence du produit (V) résultant de l'étape précédente, pz moles de polyoxyalkylènediol bromé

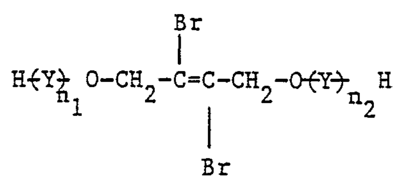 (III)

et (p-1) z moles de réactif phosphodichloré (IV).

6. Procédé d'obtention de polyétherpolyols phosphobromés utilisables selon l'une quelconque des revendications 1 et 2, caractérisé en ce que, dans une première étape, on condense z moles d'oxychlorure de phosphore en présence d'une mole d'iniateur hydroxylé

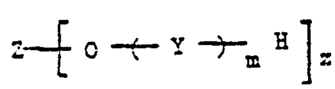 (II)

pour obtenir un produit phosphodichloré

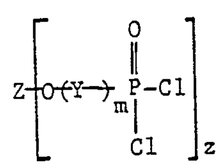 (VI)

dans une deuxième étape, on condense en présence du produit (VI) résultant de l'étape précédente pz moles de polyoxyalkylènediol bromé

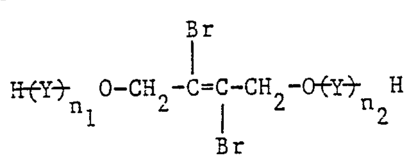 (III)

et (p-1) z moles d'oxychlorure de phosphore pour obtenir un polyétherpolyol phosphobromé

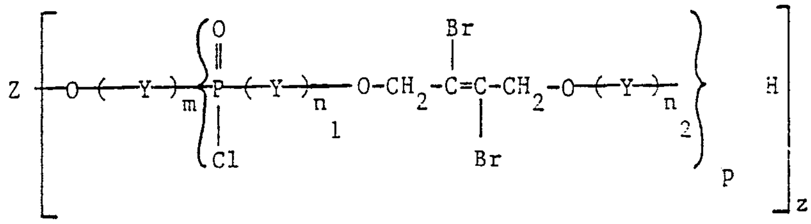

(VII)

et, dans une troisième étape, on condense en présence du produit (VII) résultant de l'étape précédente pz moles au total d'alcool aliphatique saturé, éventuellement halogéné, comprenant de 1 à 3 atomes de carbone et/ou de polyoxyalkylènediol bromé (III).

7. Procédé d'obtention de polyétherpolyols phosphobromés selon l'une quelconque des revendications 5 ou 6, caractérisé en ce qu'on réalise les différentes étapes de condensation dans un solvant organique chloré, à faible température, en présence d'un accélérateur basique organique choisi parmi les amines tertiaires.

8. Procédé d'obtention de polyétherpolyols phosphobromés selon l'une quelconque des revendications 5 à 7, caractérisé en ce qu'on introduit la totalité du réactif phosphochloré au départ de la première étape de condensation et en ce qu'on règle le déroulement des étapes successives de condensation par l'addition successive de quantités appropriées d'accélérateur basique.

**Claims** (for the Contracting States : BE, CH, DE, FR, GB, IT, LI; LU, NL, SE)

1. Phosphobrominated polyetherpolyols which contain in their molecule oxyalkylene radicals bound to phosphorus atoms in the phosphate or phosphonate state and 1,4-dioxy-2,3-dibromo-2-butylene radicals in which the ratio of the total number of oxyalkylene radicals to the total number of phosphorus atoms is equal to at least 7 and which correspond to the general formula :

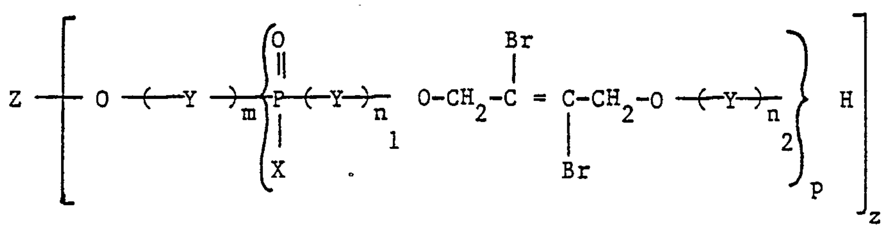

(I)

in which

Z denotes a non-hydroxylated aliphatic radical containing from 1 to 6 carbon atoms and of valence z,

Y denotes oxyalkylene radicals derived from ethylene oxide, propylene oxide and/or butylene oxide, the radicals Y derived from ethylene oxide representing at most 50 mol % of all the Y radicals,

X denotes monovalent aliphatic radicals, which may be identical or different, chosen from radicals of the —R or —OR type in which R denotes a saturated alkyl radical, optionally halogenated, containing from 1 to 3 carbon atoms, and radicals of the type

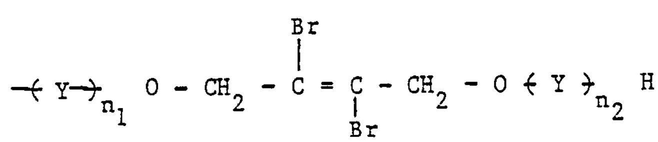

z denotes an integer ranging from 1 to 4,

m denotes a number such that $0 \leq zm \leq 50$ z,

p denotes a number such that $z \leq zp \leq 5$ z and

$n_1$ and $n_2$ denote numbers other than zero, such that $2\ pz \leq pz\ (n_1 + n_2) \leq 12\ pz$, these phosphobrominated polyetherpolyols being further characterized by a ratio of the total number of oxyalkylene radicals to the total number of phosphorus atoms equal to at least 7.

2. Phosphobrominated polyetherpolyols according to Claim 1, characterized in that :

Z denotes a non-hydroxylated aliphatic radical containing from 3 to 5 carbon atoms and of valence z,

Y denotes oxyalkylene radicals derived from propylene oxide,

X denotes monovalent aliphatic radicals, which may be identical or different, chosen from radicals of the —OR type in which R denotes a halogenated aliphatic radical containing 2 or 3 carbon atoms, the halogen being chosen from chlorine and bromine, and radicals of the type

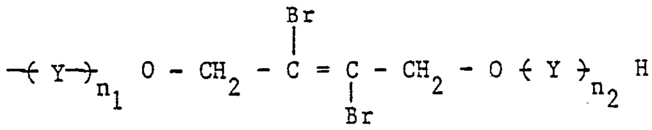

z denotes an integer ranging from 2 to 3,
m denotes a number such that z ≤ zm ≤ 25 z,
p denotes a number such that z ≤ zp ≤ 3 z and
$n_1$ and $n_2$ denote numbers other than zero such that 2 pz ≤ pz ($n_1$ + $n_2$) ≤ 10 pz.

3. Phosphobrominated polyetherpolyols according to either of Claims 1 and 2, characterized in that the ratio of the total number of oxyalkylene radicals to the total number of phosphorus atoms in between 8 and 12.

4. Process for producing phosphobrominated polyetherpolyols according to Claim 1, characterized in that, in a first stage, z moles of phosphodichlorinated reagent

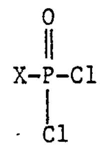 (IV)

are condensed in the presence of one mole of hydroxylated initiator

$$Z-[O-(Y)_m-H]_z \qquad (II)$$

to produce a phosphochlorinated product

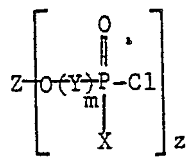 (V)

and, in a second stage, pz moles of brominated polyoxyalkylenediol

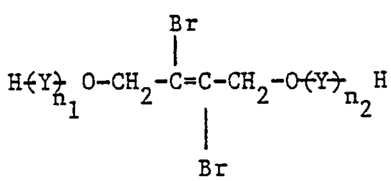 (III)

and (p-1) z moles of phosphodichlorinated reagent (IV) are condensed in the presence of the product (V) resulting from the preceding stage.

5. Process for producing phosphobrominated polyetherpolyols according to Claim 1, characterized in that, in a first stage, z moles of phosphorus oxychloride are condensed in the presence of one mole of hydroxylated initiator

$$Z-[O-(Y)_m-H]_z \qquad (II)$$

to produce a phosphodichlorinated product,

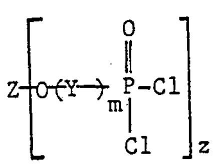 (VI)

in a second stage, pz moles of brominated polyoxyalkylenediol

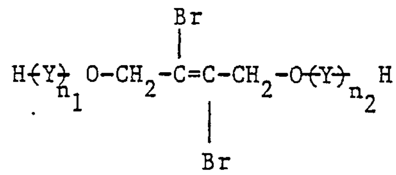

(III)

and (p-1) z moles of phosphorus oxychloride are condensed in the presence of the product (VI) resulting from the preceding stage, to produce a phosphobrominated polyetherpolyol

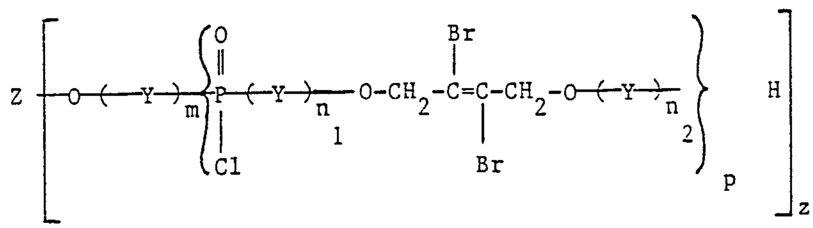

(VII)

and, in a third stage, a total of pz moles of satured aliphatic alcohol, optionally halogenated, containing from 1 to 3 carbon atoms and/or brominated polyoxyalkylenediol (III) are condensed in the presence of the product (VII) resulting from the preceding stage.

6. Process for producing phosphobrominated polyetherpolyols according to either of Claims 4 and 5, characterized in that the different condensation stages are carried out in a chlorinated organic solvent, at low temperature, in the presence of an organic basic accelerator chosen from tertiary amines.

7. Process for producing phosphobrominated polyetherpolyols according to any one of Claims 4 to 6, characterized in that all the phosphochlorinated reagent in introduced at the beginning of the first condensation stage an in that the progress of the successive condensation stages is regulated by the successive addition of appropriate amounts of basic accelerator.

8. Use of the phosphobrominated polyetherpolyols according to any one of Claims 1 to 3 as flame-retarding reactive additives in the manufacture of flame-retardant flexible polyurethane foams involving polyetherpolyols.

9. Use of the phosphobrominated polyetherpolyols according to any one of Claims 1 to 3 as flame-retarding reactive additives in the manufacture of flame-retardant flexible polyurethane foams involving polyetherpolyols based mainly on propylene oxide.

**Claims** (for the Contracting State AT)

1. Use of phosphobrominated polyetherpolyols as flame-retarding reactive additives in the manufacture of flame-retardant flexible polyurethane foams involving polyetherpolyols, characterized in that the phosphobrominated polyetherpolyols contain in their molecule oxyalkylene radicals bound to phosphorus atoms in the phosphate or phosphonate state and 1,4-dioxy-2,3-dibromo-2-butylene radicals, the ratio of the total number of oxyalkylene radicals to the total number of phosphorus atoms being equal to at least 7 and in that they correspond to the general formula :

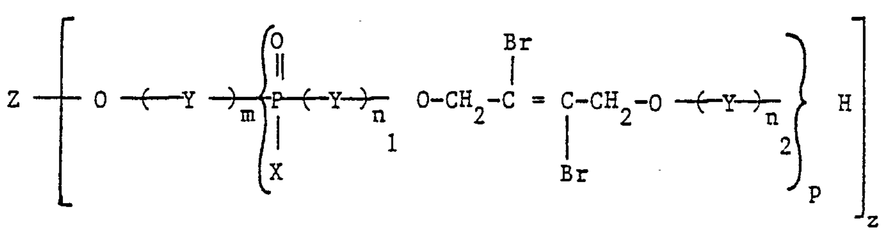

(I)

in which

Z denotes a non-hydroxylated aliphatic radical containing from 1 to 6 carbon atoms and of valence z,

Y denotes oxyalkylene radicals derived from ethylene oxide, propylene oxide and/or butylene oxide, the radicals Y derived from ethylene oxide representing at most 50 mol% of all the Y radicals,

X denotes monovalent aliphatic radicals, which may be identical or different, chosen from radicals of the —R or —OR type in which R denotes a satured alkyl radical, optionally halogenated, containing from 1 to 3 carbon atoms, and radicals of the type

$$-\!\!(Y)_{n_1} O - CH_2 - \underset{}{\overset{Br}{\overset{|}{C}}} = \underset{\underset{Br}{|}}{C} - CH_2 - O (Y)_{n_2} H$$

z denotes an integer ranging from 1 to 4,
m denotes a number such that $0 \leq zm \leq 50$ z,
p denotes a number such that $z \leq zp \leq 5$ z and
$n_1$ and $n_2$ denote numbers other than zero, such that $2\ pz \leq pz\ (n_1 + n_2) \leq 12\ pz$, these phosphobrominated polyetherpolyols being further characterized by a ratio of the total number of oxyalkylene radicals to the total number of phosphorus atoms equal to at least 7.

2. Use of phosphobrominated polyetherpolyols according to Claim 1 as flame-retarding reactive additives in the manufacture of flame-retardant flexible polyurethane foams involving polyetherpolyols based mainly on propylene oxide.

3. Use of phosphobrominated polyetherpolyols according to Claim 1, characterized in that :
Z denotes a non-hydroxylated aliphatic radical containing from 3 to 5 carbon atoms and of valence z,
Y denotes oxyalkylene radicals derived from propylene oxide,
X denotes monovalent aliphatic radicals, which may be identical or different, chosen from radicals of the —OR type in which R denotes a halogenated aliphatic radical containing 2 or 3 carbon atoms, the halogen being chosen from chlorine and bromine, and radicals of the type

$$-\!\!(Y)_{n_1} O - CH_2 - \overset{Br}{\overset{|}{C}} = \underset{\underset{Br}{|}}{C} - CH_2 - O (Y)_{n_2} H$$

z denotes an integer ranging from 2 to 3,
m denotes a number such that $z \leq zm \leq 25$ z,
p denotes a number such that $z \leq zp \leq 3$ z and
$n_1$ and $n_2$ denote numbers other than zero such that $2\ pz \leq pz\ (n_1 + n_2) \leq 10\ pz$.

4. Use of phosphobrominated polyetherpolyols according to any one of Claims 1 to 3, characterized in that the ratio of the total number of oxyalkylene radicals to the total number of phosphorus atoms is between 8 and 12.

5. Process for producing phosphobrominated polyetherpolyols according to either of Claims 1 and 2, characterized in that, in a first stage, z moles of phosphodichlorinated reagent

$$X-\overset{O}{\overset{\|}{\underset{\underset{Cl}{|}}{P}}}-Cl \qquad (IV)$$

are condensed in the presence of one mole of hydroxylated initiator

$$Z - [\, O - (Y)_m H \,]_z \qquad (II)$$

to produce a phosphochlorinated product

$$Z \left[ O (Y)_m \overset{O}{\overset{\|}{\underset{\underset{X}{|}}{P}}} - Cl \right]_z \qquad (V)$$

and, in a second stage, pz moles of brominated polyoxyalkylenediol

$$H(Y)_{n_1} O-CH_2-\overset{Br}{\overset{|}{C}}=\underset{\underset{Br}{|}}{C}-CH_2-O(Y)_{n_2} H \qquad (III)$$

and (p-1) z moles of phosphodichlorinated reagent (IV) are condensed in the presence of the product (V) resulting from the preceding stage.

6. Process for producing phosphobrominated polyetherpolyols according to either of Claims 1 and 2, characterized in that, in a first stage, z moles of phosphorus oxychloride are condensed in the presence of one mole of hydroxylated initiator

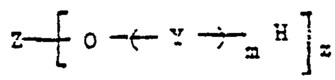

(II)

to produce a phosphodichlorinated product,

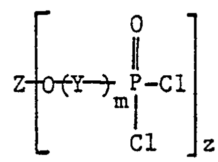

(VI)

in a second stage, pz moles of brominated polyoxyalkylenediol

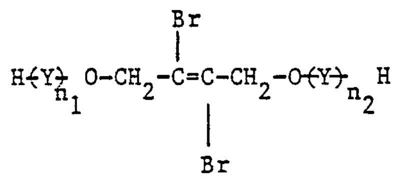

(III)

and, (p-1) z moles of phosphorus oxychloride are condensed in the presence of the product (VI) resulting from the preceding stage, to produce a phosphobrominated polyetherpolyol

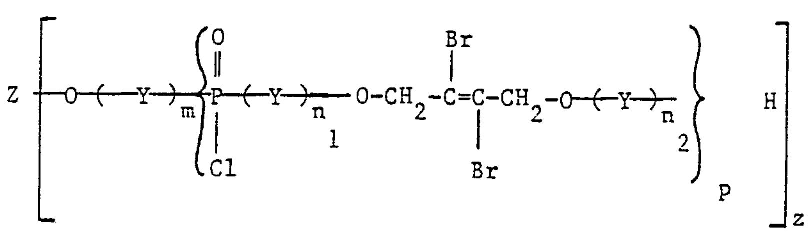

(VII)

and, in a third stage, a total of pz moles of saturated aliphatic alcohol, optionally halogenated, containing from 1 to 3 carbon atoms and/or brominated polyoxyalkylendiol (III) are condensed in the presence of the product (VII) resulting from the preceding stage.

7. Process for producing phosphobrominated polyetherpolyols according to either of Claims 5 and 6, characterized in that the different condensation stages are carried out in a chlorinated organic solvent, at low temperature, in the presence of an organic basic accelerator chosen from tertiary amines.

8. Process for producing phosphobrominated polyetherpolyols according to any one of Claims 5 to 7, characterized in that all the phosphochlorinated reagent is introduced at the beginning of the first condensation stage and in that the progress of the successive condensation stages is regulated by the successive addition of appropriate amounts of basic accelerator.

**Patentansprüche** (für die Vertragsstaaten : BE, CH, DE, FR, GB, IT, LI, LU, NL, SE)

1. Phosphobromierte Polyetherpolyole enthaltend in ihrem Molekül oxyalkylenische Reste, die an Phosphoratome im Zustand von Phosphat oder Phosphonat gebunden sind, und 1,4-dioxy-2,3-dibromo-2-butenylenische Reste, in denen das Verhältnis zwischen der Gesamtzahl der oxyalkylenischen Reste und der Gesamtzahl der Phosphoratome gleich wenigstens 7 ist und, die der allgemeinen Formel :

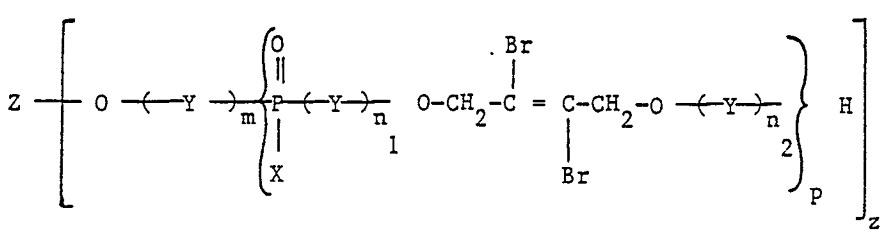

(I)

entsprechen, in der :

Z einen aliphatischen, nicht hydroxylierten Rest enthaltend von 1 bis 6 Kohlenstoffatome und der Wertigkeit z darstellt,

Y oxyalkylenische Reste, die von den Oxyden von Ethylen, Propylen und/oder Butylen herstammen, darstellt, wobei die Reste Y, die von Ethylenoxyd herstammen, höchstens 50 Mol-% der Gesamtheit der Reste Y darstellen,

X aliphatische, monovalente, identische oder unterschiedliche Reste darstellt, ausgewählt unter den Resten des Typs —R oder —OR, worin R einen gesättigten, gegebenenfalls halogenierten Alkylrest darstellt, umfassend von 1 bis 3 Kohlenstoffatome und Reste des Typs

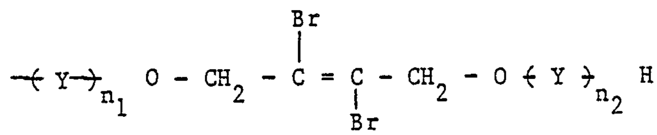

z eine ganze Zahl von 1 bis 4 darstellt,

m eine Zahl von $0 \leq zm \leq 50$ z darstellt,

p eine Zahl von $z \leq zp \leq 5$ z darstellt und

$n_1$ und $n_2$ Zahlen, unterschiedlich von 0, wie $2\ pz \leq pz\ (n_1 + n_2) \leq 12\ pz$ darstellen, wobei diese phosphobromierten Polyetherpolyole im übrigen gekennzeichnet sind durch ein Verhältnis zwischen der Gesamtzahl der oxyalkylenischen Reste und der Gesamtzahl der Phosphoratome gleich wenigstens 7.

2. Phosphobromierte Polyetherpolyole nach Anspruch 1, dadurch gekennzeichnet, daß :

Z einen aliphatischen, nicht hydroxylierten Rest, enthaltend 3 bis 5 Kohlenstoffatome und der Wertigkeit z darstellt,

Y oxyalkylenische Reste, die von Propylenoxyd abgeleitet sind, darstellt,

X monovalente, identische oder unterschiedliche aliphatische Reste darstellt, ausgewählt unter Resten des Typs —OR, worin R darstellt einen halogenierten aliphatischen Rest, enthaltend 2 oder 3 Kohlenstoffatome, wobei das Halogen aus Chlor und Brom ausgewählt ist, und die Reste des Typs

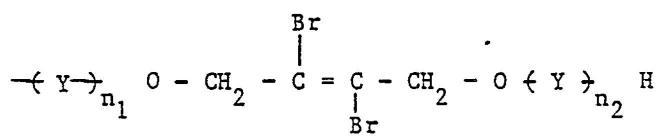

z stellt eine ganze Zahl von 2 bis 3 dar,

m stellt eine Zahl von $z \leq zm \leq 25$ z dar,

p stellt eine Zahl von $z \leq zp \leq 3$ z dar und

$n_1$ und $n_2$ stellen Zahlen, unterschiedlich von 0, wie $2\ pz \leq pz\ (n_1 + n_2) \leq 10\ pz$ dar.

3. Phosphobromierte Polyetherpolyole nach einem der Ansprüche 1 und 2, dadurch gekennzeichnet, daß das Verhältnis zwischen der Gesamtzahl der oxyakylenischen Reste und der Gesamtzahl der Phosphoratome zwischen 8 und 12 ist.

4. Verfahren zur Darstellung von phosphobromierten Polyetherpolyolen nach Anspruch 1, dadurch gekennzeichnet, daß man

in einer ersten Stufe z Mole des phosphodichlorierten Reagenz

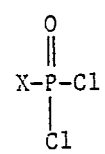

(IV)

in Gegenwart eines Moles des hydroxylierten Initiators

$$Z\left[O-(Y)_m-H\right]_z \qquad \text{(II)}$$

zum Erhalt eines phosphochlorierten Produkts

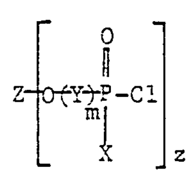

(V)

kondensiert, und in einer zweiten Stufe in Gegenwart des Produktes (V), das aus der vorhergehenden Stufe resultiert, pz Mole des bromierten Polyoxyalkylendiols

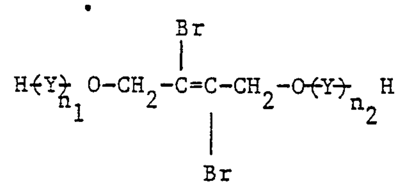

(III)

und (p-1) z Mole des phosphodichlorierten Reagenzes (IV) kondensiert.

5. Verfahren zur Darstellung der phosphobromierten Polyetherpolyole nach Anspruch 1, dadurch gekennzeichnet, daß man in einer ersten Stufe z Mole Phosphoroxychlorid in Gegenwart eines Moles des hydroxylierten Initiators

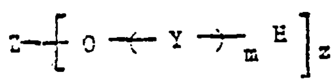

(II)

kondensiert, um ein phosphodichloriertes Produkt

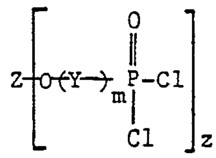

(VI)

zu erhalten, man in einer zweiten Stufe in Gegenwart des Produktes (VI), resultierend aus der vorhergehenden Stufe, pz Mole des bromierten Polyoxyalkylendiols

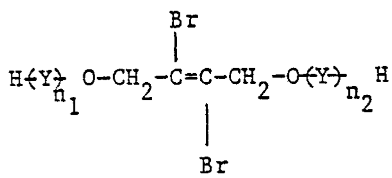

(III)

und (p-1) z Mole Phosphoroxychlorid kondensiert, um ein phosphobromiertes Polyetherpolyol

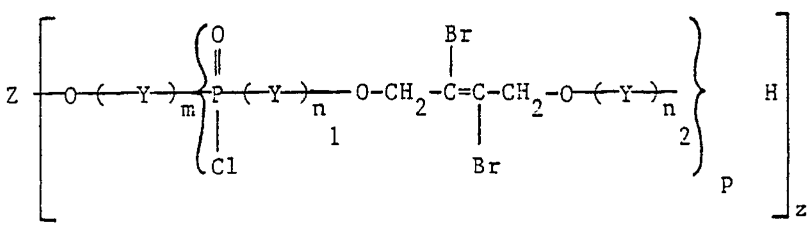

(VII)

zu erhalten und, man in einer dritten Stufe in Gegenwart des Produktes (VII), resultierend aus der vorhergehenden Stufe, insgesamt pz Mole eines gesättigten, aliphatischen Alkohols, gegebenenfalls halogeniert, enthaltend von 1 bis 3 Kohlenstoffatome und/oder bromiertes Polyoxyalkylendiol (III) kondensiert.

6. Verfahren zur Darstellung von phosphobromierten Polyetherpolyolen nach einem der Ansprüche 4 oder 5, dadurch gekennzeichnet, daß man die unterschiedlichen Stufen der Kondensation in einem chlorierten organischen Lösungsmittel bei niedriger Temperatur, in Gegenwart eines basischen organischen Beschleunigers, ausgewählt aus den tertiären Aminen, durchführt.

7. Verfahren zur Darstellung von phosphobromierten Polyetherpolyolen nach einem der Ansprüche 4 bis 6, dadurch gekennzeichnet, daß man die Gesamtheit der phosphochlorierten Reagenzien beim Start der ersten Kondensationsstufe einführt und, daß man den Ablauf der sukzessiven Kondensationsstufen durch die sukzessive Zugabe von geeigneten Mengen des basischen Beschleunigers regelt.

8. Verwendung der phosphobromierten Polyetherpolyole nach einem der Ansprüche 1 bis 3 als reaktive flammfeste Zusatzstoffe bei der Herstellung von elastischen, aufgrund der Einwirkung von Polyetherpolyolen flammfesten Polyurethanschaumstoffen.

9. Verwendung der phosphobromierten Polyetherpolyole nach einem der Ansprüche 1 bis 3 als reaktive, flammfeste Zusatzstoffe bei der Herstellung von elastischen, aufgrund der Einwirkung von Polyetherpolyolen hauptsächlich auf der Grundlage von Propylenoxyd flammfesten Polyurethanschaumstoffen.

**Patentansprüche** (für den Vertragsstaat AT)

1. Verwendung von phosphobromierten Polyetherpolyolen als reaktive, flammfeste Zusatzstoffe bei der Herstellung von flexiblen, aufgrund der Einwirkung von Polyetherpolyolen flammfesten Polyurethanschaumstoffen, dadurch gekennzeichnet, daß die phosphobromierten Polyetherpolyole in ihrem Molekül oxyalkylenische Reste, die an die Phosphoratome im Zustand von Phosphat oder Phosphonat gebunden sind und 1,4-dioxy-2,3-dibromo-2-butenylenische Reste enthalten, wobei das Verhältnis zwischen der Gesamtzahl der oxyalkylenischen Reste und der Gesamtzahl der Phosphoratome gleich mindestens 7 ist und, daß sie der allgemeinen Formel :

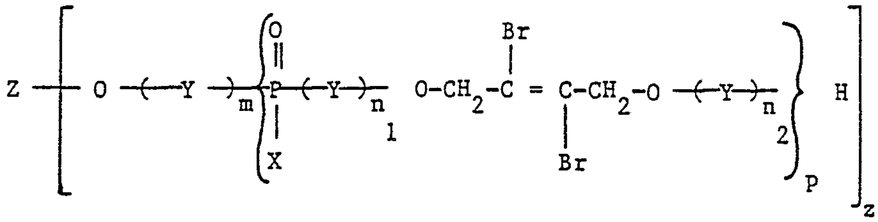

(I)

entsprechen, worin :

Z einen aliphatischen, nicht hydroxylierten Rest enthaltend von 1 bis 6 Kohlenstoffatome und der Wertigkeit z darstellt,

Y oxyalkylenische Reste, die von den Oxyden von Ethylen, Propylen und/oder Butylen herstammen, darstellt, wobei die Reste Y, die von Ethylenoxyd herstammen, höchstens 50 Mol-% der Gesamtheit der Reste Y darstellen,

X monovalente, identische oder unterschiedliche aliphatische Reste darstellt, ausgewählt unter Resten des Typs —R oder —OR, worin R darstellt einen gesättigten Alkylrest, gegebenenfalls halogeniert, enthaltend von 1 bis 3 Kohlenstoffatome und Reste des Typs

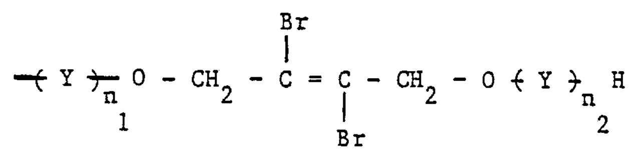

z eine ganze Zahl von 1 bis 4 darstellt,

m eine Zahl von $0 \leq zm \leq 50$ z darstellt,

p eine Zahl von $z \leq zp \leq 5$ z darstellt und

$n_1$ und $n_2$ Zahlen, unterschiedlich von 0, wie $2\ pz \leq pz\ (n_1 + n_2) \leq 12\ pz$ darstellen, wobie diese phosphobromierten Polyetherpolyole außerdem durch ein Verhältnis zwischen der Gesamtzahl der oxyalkylenischen Reste und der Gesamtzahl der Phosphoratome gleich mindestens 7 charakterisiert sind.

2. Verwendung der phosphobromierten Polyetherpolyole nach Anspruch 1 als Reaktive, flammfeste Zusatzstoffe bei der Herstellung von elastischen, aufgrund der Einwirkung von Polyetherpolyolen hauptsächlich auf der Grundlage von Propylenoxyd flammfesten Polyurethanschaumstoffen.

3. Verwendung von phosphobromierten Polyetherpolyolen nach Anspruch 1, dadurch gekenzeichnet, daß :

Z einen aliphatischen, nicht hydroxylierten Rest, enthaltend 3 bis 5 Kohlenstoffatome und der Wertigkeit z darstellt,

Y oxyalkylenische Reste, die von Propylenoxyd abgeleitet sind, darstellt,

X monovalente, identische oder unterschiedliche aliphatische Reste darstellt, ausgewählt unter Resten des Typs —OR, worin R darstellt einen halogenierten aliphatischen Rest, enthaltend 2 oder 3 Kohlenstoffatome, wobei das Halogen aus Chlor und Brom ausgewählt ist, und Reste des Typs

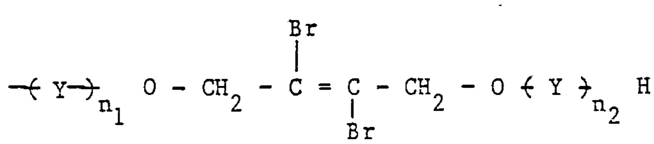

z eine ganze Zahl von 2 bis 3 darstellt,
m eine Zahl von z ≤ zm ≤ 25 z darstellt,
p eine Zahl von z ≤ zp ≤ 3 z darstellt und
$n_1$ und $n_2$ Zahlen, unterschiedlich von 0, von 2 pz ≤ pz ($n_1 + n_2$) ≤ 10 pz darstellen.

4. Verwendung von phosphobromierten Polyetherpolyolen nach einem der Ansprüche 1 bis 3, dadurch gekennzeichnet, daß das Verhältnis zwischen der Gesamtzahl der oxyalkylenischen Reste und der Gesamtzahl der Phosphoratome zwischen 8 und 12 ist.

5. Verfahren zur Darstellung von phosphobromierten Polyetherpolyolen, verwendbar nach einem der Ansprüche 1 bis 2, dadurch gekennzeichnet, daß in einer ersten Stufe, man z Mole des phosphodichlorierten Reagenzes

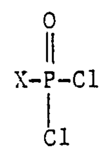

(IV)

in Gegenwart eines Moles des hydroxylierten Initiators

$$Z\left[O-(Y)_m-H\right]_z \qquad (II)$$

kondensiert, um ein phosphochloriertes Produkt

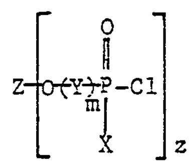

(V)

zu erhalten und in einer zweiten Stufe, man in Gegenwart des Produktes (V), das aus der vorhegehenden Stufe resultiert, pz Mole des bromierten Polyoxyalkylendiols

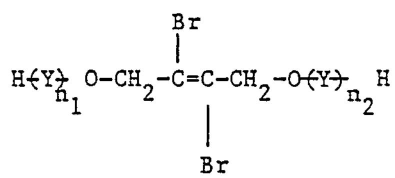

(III)

und (p-1) z Mole des phosphodichlorierten Reagenz (IV) kondensiert.

6. Verfahren zur Darstellung von phosphobromierten Polyetherpolyolen, verwendbar nach einem der Ansprüche 1 und 2, dadurch gekennzeichnet, daß in einer ersten Stufe, man z Mole Phosphoroxychlorid in Gegenwart eines Moles des hydroxylierten Initiators

$$Z\left[O-(Y)_m-H\right]_z \qquad (II)$$

kondensiert, um ein phosphodichloriertes Produkt

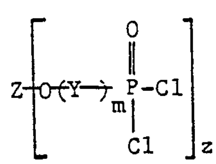

(VI)

zu erhalten, in einer zweiten Stufe, man in Gegenwart des Produktes (VI), resultierend aus der vorhergehenden Stufe, pz Mole des bromierten Polyoxyalkylendiols

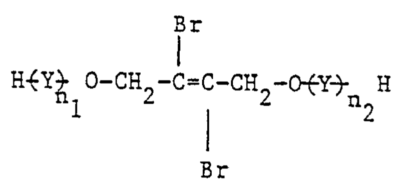

(III)

und (p-1) z Mole Phosphoroxychlorid kondensiert, um ein phosphobromiertes Polyetherpolyol

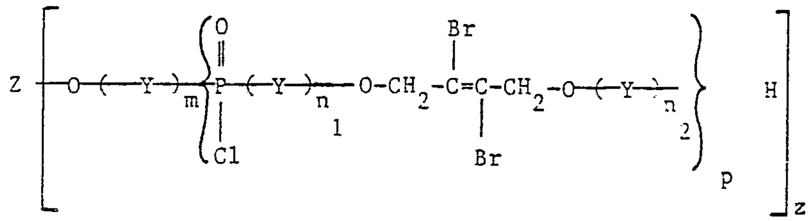

(VII)

zu erhalten und, in einer dritten Stufe, man in Gegenwart des Produktes (VII), resultierend aus der vorhergehenden Stufe, insgesamt pz Mole des gesättigten, aliphatischen Alkohols, gegebenenfalls halogeniert, enthaltend von 1 bis 3 Kohlenstoffatome und/oder bromiertes Polyoxyalkylendiol (III) kondensiert.

7. Verfahren zur Darstellung von phosphobromierten Polyetherpolyolen nach einem der Ansprüche 5 oder 6, dadurch gekennzeichnet, daß man die unterschiedlichen Kondensationsstufen in einem organischen, chlorierten Lösungsmittel bei niedriger Temperatur, in Gegenwart eines organischen, basischen Beschleunigers, ausgewählt unter den tertiären Aminen, durchführt.

8. Verfahren zur Darstellung von phosphobromierten Polyetherpolyolen nach einem der Ansprüche 5 bis 7, dadurch gekennzeichnet, daß man die Gesamtheit des phosphochlorierten Reagenzes beim Start der ersten Kondensationsstufe einführt und, daß man den Ablauf der sukzessiven Kondensationsstufen durch sukzessive Zugabe von geeigneten Mengen des basischen Beschleunigers regelt.